# EUROPEAN PATENT APPLICATION

(11) **EP 4 585 657 A1**
(43) Date of publication of application: **16.07.2025**
(21) Application number: 25150718.2
(22) Date of filing: 08.01.2025
(51) Int. Cl.: C09D 11/102, C09D 11/30, C09D 11/322, C09D 11/38

(54) **INKJET INK**

(30) Priority: 10.01.2024 JP 2024001757
(71) Applicant: KYOCERA Document Solutions Inc., Osaka-shi, Osaka, 540-8585 (JP)
(72) Inventor: TAKAORI, Yasuko, Osaka-shi, Osaka, 540-8585 (JP)
(74) Representative: Viering, Jentschura & Partner mbB Patent- und Rechtsanwälte

(57) **Abstract**

An inkjet ink includes: a pigment; a resin particle; and an aqueous medium. The resin particle includes a specific urethane resin. A content ratio of the resin particles is 2.5 mass% or more and 9.0 mass% or less. The specific urethane resin has a breaking elongation at 25°C of 60% or less. The specific urethane resin has a glass transition temperature of 40°C or more and 110°C or less. The aqueous medium includes water and a specific organic solvent. A content ratio of the specific organic solvent is 0.3 mass% or more and less than 2.0 mass%. The specific organic solvent has a boiling point of 200°C or more and 275°C or less. The specific organic solvent has an SP value of 19.5 (J/cm³)^{1/2} or more and 26.0 (J/cm³)^{1/2} or less.

## Description

### Field

The present disclosure relates to an inkjet ink.

### Background

Some inkjet recording apparatuses use a water-based inkjet ink that includes a pigment and an aqueous medium. The inkjet ink is desired to have excellent ejection stability. Further, the inkjet recording apparatus forms an image on a non-permeable recording medium such as a (biaxially oriented polypropylene) OPP film and a polyethylene terephthalate (PET) film in some cases.

Further, when the image formed on the non-permeable recording medium using the inkjet recording apparatus is in contact with another member (e.g., a different recording medium), the pigment contained in the image adheres to the different member or the image peels off the recording medium in some cases. For this reason, inkjet inks used for such applications are desired to be capable of forming images having excellent rubfastness and adhesion to the recording medium even when the images are formed on non-permeable recording media.

In order to meet such a demand, for example, an inkjet ink that includes a pigment, fine particles of a polyester resin having a particle diameter of 30 to 300 nm, and a water-soluble epoxy compound has been proposed (Japanese Patent Application Laid-open No. 2003-313468).

### Summary

An inkjet ink according to the present disclosure includes: a pigment; a resin particle; and an aqueous medium. The resin particle includes a specific urethane resin. A content ratio of the resin particle is 2.5 mass% or more and 9.0 mass% or less. The specific urethane resin has a breaking elongation at 25°C of 60% or less. The specific urethane resin has a glass transition temperature of 40°C or more and 110°C or less. The aqueous medium includes water and a specific organic solvent. A content ratio of the specific organic solvent is 0.3 mass% or more and less than 2.0 mass%. The specific organic solvent has a boiling point of 200°C or more and 275°C or less. The specific organic solvent has an SP value of 19.5 (J/cm³)^{1/2} or more and 26.0 (J/cm³)^{1/2} or less.

The inkjet ink according to the present disclosure has excellent ejection stability and is capable of forming an image having excellent rubfastness and adhesion to the recording medium.

These and other objects, features and advantages of the present disclosure will become more apparent in light of the following detailed description of best mode embodiments thereof, as illustrated in the accompanying drawings.

### Detailed Description

An embodiment of the present disclosure will be described below. Note that in the following, the measured value of the volume median diameter (D₅₀) is a value measured using a dynamic light scattering particle size distribution analyzer (e.g., "Zetasizer Nano ZS" manufactured by Malvern Panalytical Ltd.), unless otherwise specified.

The breaking elongation can be measured by a tensile test using a tensile tester at 25°C in accordance with "Japanese Industrial Standard (JIS) K7127-1999".

Unless otherwise specified, the measured value of the glass transition temperature (Tg) is a value measured using a differential scanning calorimeter (e.g., "DSC-60" manufactured by SHIMADZU CORPORATION) in accordance with "Japanese Industrial Standard (JIS) K7121-2012". In the endothermic curve (vertical axis: heat flow (DSC signal), horizontal axis: temperature, heating rate of 5°C/min) measured by a differential scanning calorimeter, the temperature at the inflection point due to glass transition (in detail, the temperature at the intersection of the extrapolated line of the baseline and the extrapolated line of the falling line) corresponds to Tg (glass transition temperature).

Unless otherwise specified, the SP value indicates a value calculated using "Hansen Solubility Parameter in Practice (HSPiP) Ver.5.2.06" (developers: Prof. Steven Abbott, et al.) that is SP value calculation and estimation software.

Note that in the present specification, acrylic and methacrylic are collectively referred to as "(meth)acrylic" in some cases. The components described in the present specification may each be used alone, or two or more of them may be used in combination. The phrase "at least one of A or B" means "A, B, or A and B".

### <Inkjet ink>

An inkjet ink (hereinafter, referred to simply as an ink in some cases) according to an embodiment of the present disclosure will be described below. The ink according to this embodiment includes a pigment, a resin particle, and an aqueous medium. The resin particle includes a specific urethane resin. In the ink according to this embodiment, the content ratio of the resin particle is 2.5 mass% or more and 9.0 mass% or less. The specific urethane resin has a breaking elongation at 25°C of 60% or less. The specific urethane resin has a glass transition temperature of 40°C or more and 110°C or less. The aqueous medium includes water and a specific organic solvent. In the ink according to this embodiment, the content ratio of the specific organic solvent is 0.3 mass% or more and less than 2.0 mass%. The specific organic solvent has a boiling point of 200°C or more and 275°C or less. The specific organic solvent has an SP value of 19.5 (J/cm³)^{1/2} or more and 26.0 (J/cm³)^{1/2} or less.

By having the above-mentioned configuration, the ink according to this embodiment has excellent ejection stability and is capable of forming an image having excellent rubfastness and adhesion to the recording medium. The reason why the ink according to this embodiment exhibits the above-mentioned effects is presumed to be as follows.

The ink according to this embodiment includes a resin particle including a specific urethane resin at a certain ratio (specifically, 2.5 mass% or more and 9.0 mass% or less). The specific urethane resin is a urethane resin that has a breaking elongation of 60% or less and a glass transition temperature of 40°C or more and 110°C or less. The resin particle functions as a binder and ensures rubfastness and adhesion to the recording medium of the image formed by the ink according to this embodiment. In particular, since the urethane resin has a polar group, it is possible to optimize the adhesion of the image formed by the ink according to this embodiment to the recording medium.

Further, the lower the breaking elongation, the urethane resin allows an ink coating film having higher film strength and more excellent abrasion resistance to be formed. For this reason, the lower the breaking elongation, the urethane resin allows an image having more excellent abrasion resistance to be formed. Further, the higher the glass transition temperature, the urethane resin has more excellent depositability of an ink coating film. Meanwhile, the lower the breaking elongation, the harder the ink coating film formed by the urethane resin, and the lower the adhesion between the image formed by the ink and the recording medium. Further, the resin particle that includes a urethane resin having an excessively high breaking elongation or a urethane resin having an excessively low glass transition temperature collapses and agglomerates when ejected and reduces the ejection stability of the ink in some cases.

By setting the breaking elongation and the glass transition temperature of the urethane resin included in the resin particle to 60% or less and 40°C or more and 110°C or less, respectively, the ink according to this embodiment is capable of effectively imparting sufficient strength to the formed image while optimizing the ejection stability.

Further, the ink according to this embodiment includes a specific organic solvent at a certain ratio (specifically, 0.3 mass% or more and less than 2.0 mass%). The specific organic solvent is an organic solvent that has a boiling point of 200°C or more and 275°C or less and an SP value of 19.5 (J/cm³)^{1/2} or more and 26.0 (J/cm³)^{1/2} or less. The organic solvent having the SP value of 19.5 (J/cm³)^{1/2} or more and 26.0 (J/cm³)^{1/2} or less has high solubility for the above-mentioned resin particle including a specific urethane resin. Further, the ink including the organic solvent having a boiling point of 200°C or more is difficult to dry. For this reason, when the ink includes the organic solvent having a boiling point of 200°C or more at a certain amount, it is possible to prevent the ink in the nozzle of the recording head from drying and the ink adhered to the ejection surface of the recording head from drying. As a result, it is possible to prevent the ink components from agglomerating and the misdirection of the ink from the recording head from occurring. Further, when the organic solvent included in the ink has a boiling point of 275°C or less, the ink dries appropriately on the surface of the recording medium. For this reason, when the organic solvent included in the ink has a boiling point of 275°C or less, it is possible to ensure the rubfastness of the formed image.

As a result, the ink according to this embodiment has excellent ejection stability and is capable of forming an image having excellent rubfastness and adhesion to the recording medium.

The ink according to this embodiment is favorably used for surface printing. Here, the surface printing refers to printing on the surface of a recording medium on the front side (surface on the side viewed by a viewer) in printing on a transparent recording medium. The recording medium subjected to surface printing has a positional relationship between "the viewer, the image, and the recording medium" in this order, and the image (ink coating film) is present on the outermost layer on the viewer side. Meanwhile, printing on the surface of a recording medium on the back side (surface on the side opposite to the side viewed by a viewer) in printing on a transparent recording medium is referred to as back printing. The recording medium subjected to back printing has a positional relationship between "the viewer, the recording medium, and the image" in this order.

For this reason, in the case of performing surface printing, the formed image tends to be desired to have particularly excellent rubfastness and adhesion to the recording medium as compared with the case of performing back printing. Since the ink according to this embodiment is capable of forming an image having excellent rubfastness and adhesion to the recording medium as described above, it can be used for surface printing and the printed matter can also be used without laminating.

Further, the ink according to this embodiment is favorably used in a recirculating recording head. The inkjet recording apparatus including a recirculating recording head is desired to have excellent ejection stability even after the ink is circulated for a long time. The ink according to this embodiment has excellent ejection stability as described above and can be suitably used even in the case where the recording head is a recirculating recording head.

The ink according to this embodiment will be described below in more detail. The ink according to this embodiment includes a pigment, a resin particle, and an aqueous medium, as described above. Note that the ink according to this embodiment favorably further includes a pigment coating resin. Further, the ink according to this embodiment favorably further includes a surfactant.

In the ink according to this embodiment, the pigment forms pigment particles together with, for example, a pigment coating resin. The pigment particles each include, for example, a core including a pigment and a pigment coating resin covering the core. The pigment coating resin is present to be, for example, dispersed in a solvent. From the viewpoint of optimizing the color density, hue, or stability of the ink according to an embodiment, the pigment particles have a volume median diameter of favorably 30 nm or more and 200 nm or less, more favorably 70 nm or more and 130 nm or less.

### [Pigment]

Examples of the pigment include a yellow pigment, an orange pigment, a red pigment, a blue pigment, a purple pigment, and a black pigment. Examples of the yellow pigment include C.I. Pigment Yellow (74, 93, 95, 109, 110, 120, 128, 138, 139, 151, 154, 155, 173, 180, 185, and 193). Examples of the orange pigment include C.I. Pigment Orange (34, 36, 43, 61, 63, and 71). Examples of the red pigment include C.I. Pigment Red (122 and 202). Examples of the blue pigment include C.I. Pigment Blue (15, more specifically 15:3). Examples of the purple pigment include C.I. Pigment Violet (19, 23, and 33). Examples of the black pigment include C.I. Pigment Black (7) .

In the ink according to this embodiment, the content ratio of the pigment is favorably 0.5 mass% or more and 10.0 mass% or less, more favorably 1.5 mass% or more and 5.0 mass% or less. By setting the content ratio of the pigment to 0.5 mass% or more, the ink according to this embodiment is capable of forming an image having desired image density. Further, by setting the content ratio of the pigment to 10.0 mass% or less, it is possible to ensure the fluidity of the ink according to this embodiment.

### [Pigment coating resin]

The pigment coating resin is a resin soluble in an aqueous medium. Part of the pigment coating resin is present on, for example, the surface of the pigment particle to optimize the dispersibility of the pigment particle. Part of the pigment coating resin is present, for example, in the state of being dissolved in the aqueous medium of the ink according to this embodiment.

As the pigment coating resin, a styrene-(meth)acrylic resin is favorable. The styrene-(meth)acrylic resin includes a repeating unit derived from at least one monomer of (meth)acrylic acid alkylester and (meth)acrylic acid and a styrene unit. Examples of the (meth)acrylic acid alkylester include methyl (meth)acrylate, ethyl (meth)acrylate, propyl (meth)acrylate, and butyl (meth)acrylate. As the styrene-(meth)acrylic resin, a copolymer (X) of styrene, methyl methacrylate, methacrylic acid, and butyl acrylate is favorable. Note that the copolymer (X) is favorably neutralized by an equal amount of a base (e.g., potassium hydroxide and sodium hydroxide).

In all repeating units included in the copolymer (X), the content ratio of the repeating unit derived from styrene is favorably 10.0 mass% or more and 20.0 mass% or less. In all repeating units included in the copolymer (X), the content ratio of the repeating unit derived from methyl methacrylate is favorably 10.0 mass% or more and 20.0 mass% or less. In all repeating units included in the copolymer (X), the content ratio of the repeating unit derived from methacrylic acid is favorably 35.0 mass% or more and 45.0 mass% or less. In all repeating units included in the copolymer (X), the content ratio of the repeating unit derived from butyl acrylate is favorably 25.0 mass% or more and 35.0 mass% or less.

In the ink according to this embodiment, the content ratio of the pigment coating resin is favorably 0.1 mass% or more and 4.0 mass% or less, more favorably 0.5 mass% or more and 1.5 mass% or less. By setting the content ratio of the pigment coating resin to 0.1 mass% or more and 4.0 mass% or less, it is possible to further optimize the ejection stability of the ink according to this embodiment.

In the ink according to this embodiment, the content of the pigment coating resin to 100.0 parts by mass of the pigment is favorably 10.0 parts by mass or more and 60.0 parts by mass or less, more favorably 20.0 parts by mass or more and 30.0 parts by mass or less. By setting the content of the pigment coating resin to 10.0 parts by mass or more and 60.0 parts by mass or less, it is possible to further optimize the ejection stability of the ink according to this embodiment.

### [Resin particle]

The resin particle is present in the state of being dispersed in the aqueous medium. The resin particle includes a specific urethane resin. The content ratio of the specific urethane resin in the resin particle is favorably 85.0 mass% or more, more favorably 90.0 mass% or more, and still more favorably 100.0 mass%.

The volume median diameter (D₅₀) of the resin particle is favorably 8 nm or more and 100 nm or less, more favorably 15 nm or more and 50 nm or less, and still more favorably 25 nm or more and 40 nm or less. By setting the volume median diameter of the resin particle to 8 nm or more, it is possible to optimize the preservation stability of the ink according to this embodiment. By setting the volume median diameter of the resin particle to 100 nm or less, it is possible to further optimize the ejection stability of the ink according to this embodiment.

The content ratio of the resin particle in the ink according to this embodiment is 2.5 mass% or more and 9.0 mass% or less, favorably 4.0 mass% or more and 6.0 mass% or less. By setting the content ratio of the resin particle to 2.5 mass% or more, the ink according to this embodiment is capable of optimizing the rubfastness and adhesion to the recording medium of the formed image. By setting the content ratio of the resin particle to 9.0 mass% or less, it is possible to optimize the ejection stability of the ink according to this embodiment.

### [Specific urethane resin]

The urethane resin is, for example, a copolymer of a diol compound or a bisphenol compound and a polyisocyanate.

Examples of the diol compound include ethylene glycol, diethylene glycol, triethylene glycol, 1,2-propanediol, 1,3-propanediol, 1,4-butanediol, neopentyl glycol, 2-butene-1,4-diol, 1,5-pentanediol, 2-pentene-1,5-diol, 1,6-hexanediol, 1,4-cyclohexanedimethanol, dipropylene glycol, 1,4-benzenediol, polyethylene glycol, polypropylene glycol, and polytetramethylene glycol.

Examples of the bisphenol compound include bisphenol A, hydrogenated bisphenol A, a bisphenol A ethylene oxide adduct (e.g., polyoxyethylene(2,2)-2,2-bis(4-hydroxyphenyl)propane), and a bisphenol A propyleneoxide adduct.

Examples of the polyisocyanate include diisocyanate. Examples of the diisocyanate include aliphatic diisocyanate, alicyclic diisocyanate, and aromatic diisocyanate.

Examples of the aliphatic diisocyanate include ethylene diisocyanate, 2,2,4-trimethylhexamethylene diisocyanate, and 1,6-hexamethylene diisocyanate.

Examples of the alicyclic diisocyanate include hydrogenated 4,4'-diphenylmethane diisocyanate, 1,4-cyclohexane diisocyanate, methylcyclohexylene diisocyanate, isophorone diisocyanate, and norbornane diisocyanate.

Examples of the aromatic diisocyanate include 4,4'-diphenylmethane diisocyanate, xylylene diisocyanate, toluene diisocyanate, and naphthalene diisocyanate.

The specific urethane resin is a urethane resin that has a breaking elongation at 25°C of 60% or less and a glass transition temperature of 40°C or more and 110°C or less.

The breaking elongation at 25°C of the specific urethane resin is 60% or less as described above, favorably 4% or more and 60% or less, and more favorably 4% or more and 10% or less. When the ink according to this embodiment includes a specific urethane resin having a breaking elongation at 25°C of 60% or less, it is possible to optimize the ejection stability of the ink according to this embodiment and optimize the rubfastness of the image formed by the ink according to this embodiment.

The glass transition temperature of the specific urethane resin is 40°C or more and 110°C or less as described above, favorably 45°C or more and 90°C or less, more favorably 65°C or more and 85°C or less. When the ink according to this embodiment includes a specific urethane resin having a glass transition temperature of 40°C or more and 110°C or less, it is possible to optimize the ejection stability of the ink according to this embodiment and optimize the adhesion to the recording medium of the image formed by the ink according to this embodiment.

### [Surfactant]

The surfactant optimizes compatibility and dispersion stability of the components contained in the ink according to this embodiment. Further, the surfactant optimizes the permeability (wettability) of the ink according to this embodiment to the recording medium. Examples of the surfactant include a nonionic surfactant.

Examples of the nonionic surfactant include an acetylene glycol surfactant (surfactant including an acetylene glycol compound), a silicone surfactant (surfactant including a silicone compound), and a fluorosurfactant (surfactant including a fluoropolymer or a fluorine-containing compound). Examples of the acetylene glycol surfactant include an ethylene oxide adduct of acetylene glycol and a propylene oxide adduct of acetylene glycol. The ink according to this embodiment favorably includes a silicone surfactant as a surfactant.

The content ratio of the surfactant in the ink according to this embodiment is favorably 0.1 mass% or more and 2.0 mass% or less, more favorably 0.2 mass% or more and 0.6 mass% or less.

### [Aqueous medium]

The aqueous medium included in the ink according to this embodiment includes water and a specific organic solvent. The specific organic solvent is a water-soluble organic solvent. The aqueous medium may function as a solvent or a dispersion medium. The aqueous medium may further include a different water-soluble organic solvent (hereinafter, referred to as a different organic solvent in some cases) other than the specific organic solvent. Examples of the specific organic solvent and the different organic solvent include a glycol compound, a glycolether compound, a lactam compound, a nitrogen-containing compound, an acetate compound, thiodiglycol, and dimethylsulfoxide.

### (Water)

In the ink according to this embodiment, the content ratio of water is favorably 40.0 mass% or more and 85.0 mass% or less, more favorably 50.0 mass% or more and 70.0 mass% or less. By setting the content ratio of water to 40.0 mass% or more and 85.0 mass% or less, it is possible to optimize the ejection stability of the ink according to this embodiment.

The specific organic solvent has a boiling point of 200°C or more and 275°C or less and an SP value of 19.5 (J/cm³)^{1/2} or more and 26.0 (J/cm³)^{1/2} or less.

The boiling point of the specific organic solvent is 200°C or more and 275°C or less as described above, favorably 200°C or more and 250°C or less, more favorably 200°C or more and 220°C or less. When the ink according to this embodiment includes a specific organic solvent having a boiling point of 200°C or more and 275°C or less, it is possible to optimize the ejection stability of the ink according to this embodiment and optimize the rubfastness and adhesion to the recording medium of the image formed by the ink according to this embodiment.

The SP value of the specific organic solvent is 19.5 (J/cm³)^{1/2} or more and 26.0 (J/cm³)^{1/2} or less as described above, favorably 20.0 (J/cm³)^{1/2} or more and 25.5 (J/cm³)^{1/2} or less, more favorably 23.0 (J/cm³)^{1/2} or more and 25.5 (J/cm³)^{1/2} or less. When the ink according to this embodiment includes a specific organic solvent having an SP value of 19.5 (J/cm³)^{1/2} or more and 26.0 (J/cm³)^{1/2} or less, it is possible to optimize the ejection stability of the ink according to this embodiment and optimize the rubfastness and adhesion to the recording medium of the image formed by the ink according to this embodiment.

As the specific organic solvent, a diethylene glycol monobutyl ether, a triethylene glycol monomethyl ether, a tripropylene glycol, or 3-methyl-1,3-butanediol is favorable.

Examples of the different organic solvent include an organic solvent having a boiling point of less than 200°C or exceeding 275°C, and an organic solvent having an SP value of less than 19.5 (J/cm³)^{1/2} or exceeding 26.0 (J/cm³)^{1/2}. Examples of the different organic solvent include a polyhydric alcohol, a glycolether compound, and the like, which satisfy at least one of the conditions of the boiling point of less than 200°C or exceeding 275°C and the SP value of less than 19.5 (J/cm³)^{1/2} or exceeding 26.0 (J/cm³)^{1/2}. Examples of the polyhydric alcohol satisfying the above-mentioned condition include a propylene glycol, a triethylene glycol, a tripropylene glycol, 3-methyl-1,3-butanediol, and glycerin. Further, examples of the glycolether compound satisfying the above-mentioned condition include a dipropylene glycol methyl ether, a diethylene glycol monobutyl ether, and a triethylene glycol monomethyl ether.

The polyhydric alcohol functions as, for example, a moisturizing agent. The moisturizing agent prevents the liquid components in the ink according to this embodiment from evaporating, which allows the viscosity to be stabilized. For this reason, the ink according to this embodiment favorably further includes a moisturizing agent. When the ink according to this embodiment further includes a moisturizing agent, the liquid components in the ink according to this embodiment are prevented from evaporating, and it is possible to further optimize the ejection stability.

Further, the glycolether compound functions as, for example, a wetting agent that increases the wettability to the base material used as a recording medium. The wetting agent enhances the wettability and spreadability of the ink according to this embodiment to the recording medium (base material) and is capable of further optimizing the adhesion of the formed image to the recording medium. For this reason, the ink according to this embodiment favorably further includes a wetting agent.

The above-mentioned polyhydric alcohol can be used as a moisturizing agent. Of these, propylene glycol is favorable. Further, the above-mentioned glycolether compound can be used as a wetting agent. Of these, triethylene glycol monobutyl ether is favorable. For this reason, the ink according to this embodiment favorably further include propylene glycol and triethylene glycol monobutyl ether as the different organic solvents.

In the ink according to this embodiment, the content ratio of the specific organic solvent is 0.3 mass% or more and less than 2.0 mass%, favorably 1.0 mass% or more and 1.7 mass% or less. By setting the content ratio of the specific organic solvent to 0.3 mass% or more and less than 2.0 mass%, it is possible to optimize the rubfastness and adhesion to the recording medium of the image formed by the ink according to this embodiment.

In the ink according to this embodiment, the content ratio of the different organic solvent is favorably 10.0 mass% or more and 50.0 mass% or less, more favorably 20.0 mass% or more and 40.0 mass% or less.

Further, in the case where the ink according to this embodiment includes a moisturizing agent, the content ratio of the moisturizing agent in the ink according to this embodiment is favorably 7.0 mass% or more and 35.0 mass% or less, more favorably 15.0 mass% or more and 25.0 mass% or less.

In the case where the ink according to this embodiment includes a wetting agent, the content ratio of the wetting agent of the ink according to this embodiment is favorably 3.0 mass% or more and 15.0 mass% or less, more favorably 5.0 mass% or more and 15.0 mass% or less.

The aqueous medium favorably includes only water, the specific organic solvent, propylene glycol, and triethylene glycol monobutyl ether. The total content ratio of water, the specific organic solvent, propylene glycol, and triethylene glycol monobutyl ether in the aqueous medium is favorably 90.0 mass% or more, more favorably 95.0 mass% or more, and still more favorably 100.0 mass%.

### [Other components]

The ink according to this embodiment may further include, as necessary, known additives (e.g., a dissolution stabilizer, an anti-drying agent, an antioxidant, a viscosity adjustor, a pH adjuster, and an antifungal agent).

### [Favorable composition]

The ink according to this embodiment favorably has any of compositions 1 to 11 shown in the following Tables 1 to 3. Note that in the following Table 1, the "ratio" represents a numerical range of a favorable content ratio [mass%] . For example, the ratio "2.7-3.3" of the pigment in the composition 1 indicates that the pigment is contained at 2.7 mass% or more and 3.3 mass% or less. The "resin" represents a pigment coating resin. Types "r-1" to "r-4" of the specific urethane resin respectively represent specific urethane resin particles (r-1) to (r-4) used in Example. A type "DEGMBE" of the specific organic solvent represents a diethylene glycol monobutyl ether. A type "TEGMME" represents a triethylene glycol monomethyl ether. A type "TPG" represents a tripropylene glycol. A type "3M-1,3BD" represents 3-methyl-1,3-butanediol. A type "PG" of the different organic solvent represents propylene glycol. A type "TEGMBE" represents triethylene glycol monobutyl ether. "PG (ratio)" represents a numerical range of a favorable content ratio [mass%] of propylene glycol. "TEGMBE (ratio)" represents a numerical range of a favorable content ratio [mass%] of triethylene glycol monobutyl ether.

**(Table 1)**

| Composition | | 1 | 2 | 3 | 4 |
|---|---|---|---|---|---|
| Pigment | | 2.7-3.3 | 2.7-3.3 | 2.7-3.3 | 2.7-3.3 |
| Pigment coating resin | | 0.9-1.1 | 0.9-1.1 | 0.9-1.1 | 0.9-1.1 |
| Specific urethane resin | Type | r-1 | r-1 | r-1 | r-1 |
| | Ratio | 4.5-5.5 | 4.5-5.5 | 4.5-5.5 | 4.5-5.5 |
| Specific organic solvent | Type | 3M-1.3BD | TPG | TEGMME | DEGMBE |
| | Ratio | 1.3-1.7 | 1.3-1.7 | 1.3-1.7 | 1.3-1.7 |
| Different organic solvent | PG (ratio) | 18.0-22.0 | 18.0-22.0 | 18.0-22.0 | 18.0-22.0 |
| | TEGMBE (ratio) | 7.2-8.8 | 7.2-8.8 | 7.2-8.8 | 7.2-8.8 |
| Surfactant | | 0.2-0.4 | 0.2-0.4 | 0.2-0.4 | 0.2-0.4 |
| Water | | Remaining amount | Remaining amount | Remaining amount | Remaining amount |

**(Table 2)**

| Composition | | 5 | 6 | 7 | 8 |
|---|---|---|---|---|---|
| Pigment | | 2.7-3.3 | 2.7-3.3 | 2.7-3.3 | 2.7-3.3 |
| Pigment coating resin | | 0.9-1.1 | 0.9-1.1 | 0.9-1.1 | 0.9-1.1 |
| Specific urethane resin | Type | r-2 | r-3 | r-4 | r-1 |
| | Ratio | 4.5-5.5 | 4.5-5.5 | 4.5-5.5 | 2.7-3.3 |
| Specific organic solvent | Type | 3M-1,3BD | 3M-1,3BD | 3M-1,3BD | 3M-1,3BD |
| | Ratio | 1.3-1.7 | 1.3-1.7 | 1.3-1.7 | 1.3-1.7 |
| Different organic solvent | PG (ratio) | 18.0-22.0 | 18.0-22.0 | 18.0-22.0 | 18.0-22.0 |
| | TEGMBE (ratio) | 7.2-8.8 | 7.2-8.8 | 7.2-8.8 | 7.2-8.8 |
| Surfactant | | 0.2-0.4 | 0.2-0.4 | 0.2-0.4 | 0.2-0.4 |
| Water | | Remaining amount | Remaining amount | Remaining amount | Remaining amount |

**(Table 3)**

| Composition | | 9 | 10 | 11 |
|---|---|---|---|---|
| Pigment | | 2.7-3.3 | 2.7-3.3 | 2.7-3.3 |
| Pigment coating resin | | 0.9-1.1 | 0.9-1.1 | 0.9-1.1 |
| Specific urethane resin | Type | r-1 | r-1 | r-1 |
| | Ratio | 7.2-8.8 | 7.2-8.8 | 7.2-8.8 |
| Specific organic solvent | Type | 3M-1,3BD | 3M-1,3BD | 3M-1,3BD |
| | Ratio | 1.3-1.7 | 1.7-1.9 | 0.4-0.6 |
| Different organic solvent | PG (ratio) | 18.0-22.0 | 18.0-22.0 | 18.0-22.0 |
| | TEGMBE (ratio) | 7.2-8.8 | 7.2-8.8 | 7.2-8.8 |
| Surfactant | | 0.2-0.4 | 0.2-0.4 | 0.2-0.4 |
| Water | | Remaining amount | Remaining amount | Remaining amount |

### [Method of producing ink]

The ink according to this embodiment can be produced, for example, by mixing a pigment dispersion liquid that includes a pigment, an urethane resin emulsion that includes resin particles including a specific urethane resin, an aqueous medium that includes water and a specific organic solvent, and another component added as necessary (e.g., a surfactant) uniformly with a stirrer. In the production of the ink according to this embodiment, after uniformly mixing each component, foreign substances and coarse particles may be removed by a filter (e.g., a filter having a pore size of 5 um or less).

### (Pigment dispersion liquid)

The pigment dispersion liquid is a dispersion liquid including a pigment. The pigment dispersion liquid favorably further includes a pigment coating resin. As the dispersion medium of the pigment dispersion liquid, water is favorable.

The content ratio of the pigment in the pigment dispersion liquid is favorably 5.0 mass% or more and 25.0 mass% or less, more favorably 10.0 mass% or more and 20.0 mass% or less. The content ratio of the pigment coating resin in the pigment dispersion liquid is favorably 1.0 mass% or more and 10.0 mass% or less, more favorably 2.0 mass% or more and 6.0 mass% or less.

The pigment dispersion liquid can be prepared wet dispersing a pigment, a pigment coating resin, a dispersion medium (e.g., water), and a component added as necessary (e.g., a surfactant) with a media-type wet disperser. In the wet dispersing using a media-type wet disperser, for example, small beads (e.g., beads having D₅₀ of 0.5 mm or more and 1.0 mm or less) can be used as media. The material of the beads is not particularly limited, but a hard material (e.g., glass and zirconia) is favorable.

In the case where a pigment dispersion liquid is added in the production of the ink according to this embodiment, the ratio of the pigment dispersion liquid to all raw materials of the ink is, for example, 10.0 mass% or more and 40.0 mass% or less.

### (Urethane resin emulsion)

The urethane resin emulsion is a dispersion liquid that includes resin particles including a urethane resin. As the dispersion medium of the urethane resin emulsion, water is favorable.

### Examples

Examples of the present disclosure will be described below. However, the present disclosure is not limited to the following Examples.

### [Preparation of pigment dispersion liquid]

A pigment dispersion liquid (C) to be used for the preparation of an ink was prepared. The components contained in the pigment dispersion liquid (C) and the amounts thereof are shown in Table 4.

**(Table 4)**

| | | Pigment dispersion liquid (C) |
|---|---|---|
| Content ratio [mass%] | Water | 80.0 |
| | Resin A-Na | 5.0 |
| | Pigment | 15.0 |
| | Total | 100.0 |

In Table 4, the "resin A-Na" represents a resin A (pigment coating resin) neutralized with sodium hydroxide (NaOH). As the pigment, a "black pigment" ("MONARCH (registered trademark) 800" manufactured by Cabot Corporation) was used.

### [Preparation of resin A]

The resin A for obtaining the "resin A-Na" in Table 4 was prepared by the following method. In detail, a stirrer, a nitrogen introduction tube, a capacitor, and a dropping funnel were set in a four-necked flask. Next, 100.0 parts by mass of isopropyl alcohol and 300.0 parts by mass of methyl ethyl ketone were added to the flask. The content of the flask was heated at 70°C to reflux while bubbling nitrogen therein.

Next, a solution L1 was prepared. In detail, 40.0 parts by mass of styrene, 10.0 parts by mass of methacrylic acid, 40.0 parts by mass of methyl methacrylate, 10.0 parts by mass of butyl acrylate, and 0.4 parts by mass of azobisisobutyronitrile (AIBN, a polymerization initiator) were mixed to obtain the solution L1 that is a monomer solution. While the content of the flask was heated at 70°C to reflux, the solution L1 was added dropwise into the flask over 2 hours. After the dropping, the content of the flask was heated at 70°C to reflux for another 6 hours.

Next, a solution L2 was prepared. In detail, 0.2 parts by mass of AIBN and 150.0 parts by mass of methyl ethyl ketone were mixed to obtain the solution L2. The solution L2 was added dropwise into the flask over 15 minutes. After the dropping, the content of the flask was heated at 70°C to reflux for another 5 hours. In this way, the resin A (styrene-(meth)acrylic resin) was obtained. The obtained resin A had a mass average molecular weight (Mw) of 20000 and the acid value of 100 mgKOH/g.

Here, the mass average molecular weight Mw of the resin A was measured using gel permeation chromatography ("HLC-8020GPC" manufactured by TOSOH CORPORATION) under the following conditions.
Column: "TSKgel SuperMultiporeHZ-H" (semi-microcolumn of 4.6 mm I.D. × 15 cm) manufactured by TOSOH CORPORATION
Number of columns: 3
Eluent: tetrahydrofuran
Flow rate: 0.35 mL/min
Sample injection amount: 10 µL
Measurement temperature: 40°C
Detector: IR detector

Calibration curves were created selecting 7 types of F-40, F-20, F-4, F-1, A-5000, A-2500, and A-1000 and n-propylbenzene from TSKgel standard polystyrene manufactured by TOSOH CORPORATION.

Further, the acid value of the resin A was measured by a method conforming to "Japanese Industrial Standard (JIS) K0070-1992 (Test methods for acid value, saponification value, ester value, iodine value, hydroxyl value and unsaponifiable matter of chemical products)".

### [Preparation of pigment dispersion liquid (C)]

An aqueous sodium hydroxide solution was added to the resin A by the amount necessary for neutralizing the resin A while heating the resin A in a warm bath at 70°C. More specifically, an aqueous sodium hydroxide solution of the mass 1.1 times the neutralization equivalent was added to the resin A. In this way, an aqueous solution of the resin A (resin A-Na) neutralized with sodium hydroxide was obtained. The pH of the aqueous solution of the resin A-Na was 8.

In order to obtain the blend amounts in Table 4, 5.0 parts by mass of the above-mentioned aqueous solution including the resin A-Na, 15.0 parts by mass of C.I. Pigment Blue 15:3, and water were added to the vessel of a media disperser ("DYNO (registered trademark)-MILL" manufactured by Willy A Bachofen AG (WAB)) such that the total amount was 100.0 parts by mass. Note that water was added such that the mass of water including the mass of water included in the aqueous sodium hydroxide solution used for neutralizing the resin A and the mass of water generated by the neutralization reaction was 80.0 parts by mass.

Next, the vessel was filled with media (zirconia beads having a diameter of 1.0 mm) such that the filling rate was 70% by volume to the volume of the vessel. The content of the vessel was dispersed using a media disperser. In this way, the pigment dispersion liquid (C) that is a pigment dispersion liquid for a black ink was obtained.

The pigment dispersion liquid (C) was diluted by 300-fold using water to obtain a diluted solution. The diluted solution was measured using a dynamic light scattering particle size distribution analyzer ("Zetasizer Nano ZS" manufactured by manufactured by Malvern Panalytical Ltd.) to obtain a volume median diameter(D₅₀) of pigment particles included in the pigment dispersion liquid (C). The fact that pigment particles having a volume median diameter within the range of 70 nm or more and 130 nm or less were dispersed in the pigment dispersion liquid (C) was made sure.

### [Urethane resin emulsion]

As resin emulsions to be used for preparing an ink, urethane resin emulsions (R-1) to (R-8) shown in the following Table 5 were prepared. All of the urethane resin emulsions (R-1) to (R-8) were manufactured by DKS Co. Ltd. The urethane resin emulsions (R-1) to (R-8) respectively included urethane resin particles (r-1) to (r-8). In the following Table 5, "Tg" represents a glass transition temperature. "(R)" indicates that it is a registered trademark. Note that the urethane resin particles (r-1) to (r-4) were resin particles of the specific urethane resin.

**(Table 5)**

| Urethane resin emulsion | | | Urethane resin particle | | | |
|---|---|---|---|---|---|---|
| Type | Model | Concentration [mass%] | Type | Breaking elongation [%] | Tg [°C] | D₅₀ [nm] |
| R-1 | SUPERFLEX(R)SF-870 | 30 | r-1 | 4 | 78 | 30 |
| R-2 | SUPERFLEX(R)SF-820 | 30 | r-2 | 5 | 46 | 30 |
| R-3 | SUPERFLEX(R)SF-130 | 35 | r-3 | 6 | 101 | 30 |
| R-4 | SUPERFLEX(R)SF-170 | 33 | r-4 | 50 | 75 | 10 |
| R-5 | SUPERFLEX(R)SF-150 | 30 | r-5 | 330 | 40 | 30 |
| R-6 | SUPERFLEX(R)SF-420 | 32 | r-6 | 290 | -10 | 10 |
| R-7 | SUPERFLEX(R)SF-126 | 30 | r-7 | 87 | 72 | 20 |
| R-8 | SUPERFLEX (R)SF-860 | 40 | r-8 | 3 | 36 | 20 |

### [Organic solvent]

As an organic solvent to be used for preparing an ink, the organic solvent shown in the following Table 6 was prepared. Note that each of a diethylene glycol monobutyl ether, a triethylene glycol monomethyl ether, a tripropylene glycol, and 3-methyl-1,3-butanediol was a specific organic solvent.

**(Table 6)**

| | SP value [(J/cm³)^{1/2}] | Boiling point [°C] |
|---|---|---|
| Dipropylene glycol methyl ether | 19.4 | 189 |
| Diethylene glycol monobutyl ether | 20.9 | 230 |
| Triethylene glycol monomethyl ether | 21.8 | 248 |
| Tripropylene glycol | 21.9 | 270 |
| 3-methyl-1,3-butanediol | 25.1 | 203 |
| Triethylene glycol | 27.5 | 287 |
| Propylene glycol | 29.1 | 188.2 |
| Triethylene glycol monobutyl ether | 19.6 | 278 |

### <Preparation of ink>

Inks according to Examples 1 to 11 and Comparative Examples 1 to 9 were prepared by the following method.

### [Example 1]

Water, 20.0 parts by mass of the pigment dispersion liquid (C) (the pigment: 3.0 parts by mass, the resin A-Na: 1.0 part by mass), 16.7 parts by mass of the urethane resin emulsion (R-1) (the urethane resin particle (r-1): 5.0 parts by mass), 1.5 parts by mass of 3-methyl-1,3-butanediol, 20.0 parts by mass of propylene glycol, 8.0 parts by mass of triethylene glycol monobutyl ether, and 0.3 parts by mass of a silicone surfactant ("SILFACE (registered trademark) SAG503A" manufactured by Nissin Chemical co.,ltd., a polyether-modified siloxane compound) were added to a beaker. The amount of water added was set such that the total amount of the mixture in the beaker was 100.0 parts by mass. The content of the beaker was mixed using a stirrer ("Three-One Motor BL-600" manufactured by Shinto Scientific Co., Ltd.) at a rotational speed of 400 rpm to obtain a mixed solution. The mixed solution was filtered using a filter (pore size of 5 um) to remove foreign substances and coarse particles included in the mixed solution. In this way, the ink according to Example 1 was obtained.

### [Examples 2 to 11 and Comparative Examples 1 to 9]

Inks according to Examples 2 to 11 and Comparative Examples 1 to 9 were prepared in the same manner as that in the preparation of the ink according to Example 1 except that the type and amount of each component were changed as shown Tables 7 to 9.

Note that in tables 7 to 9, the numerical value represents the content ratio [mass%]. "DPGME" represents a dipropylene glycol methyl ether. "DEGMBE" represents a diethylene glycol monobutyl ether. "TEGMME" represents a triethylene glycol monomethyl ether. "TPG" represents a tripropylene glycol. "3M-1,3BD" represents 3-methyl-1,3-butanediol. "TEG" represents a triethylene glycol. "PG" represents a propylene glycol. "TEGMBE" represents a triethylene glycol monobutyl ether. "-" indicates that the corresponding material is not used.

**(Table 7)**

| | | Example | | | | | | |
|---|---|---|---|---|---|---|---|---|
| | | 1 | 2 | 3 | 4 | 5 | 6 | 7 |
| Composition [mass%] | Pigment | 3.0 | 3.0 | 3.0 | 3.0 | 3.0 | 3.0 | 3.0 |
| | Resin A-Na | 1.0 | 1.0 | 1.0 | 1.0 | 1.0 | 1.0 | 1.0 |
| | Urethane resin particle (r-1) | 5.0 | 5.0 | 5.0 | 5.0 | - | - | - |
| | Urethane resin particle (r-2) | - | - | - | - | 5.0 | - | - |
| | Urethane resin particle (r-3) | - | - | - | - | - | 5.0 | - |
| | Urethane resin particle (r-4) | - | - | - | - | - | - | 5.0 |
| | Urethane resin particle (r-5) | - | - | - | - | - | - | - |
| | Urethane resin particle (r-6) | - | - | - | - | - | - | - |
| | Urethane resin particle (r-7) | - | - | - | - | - | - | - |
| | Urethane resin particle (r-8) | - | - | - | - | - | - | - |
| | DPGME | - | - | - | - | - | - | - |
| | DEGMBE | - | - | - | 1.5 | - | - | - |
| | TEGMME | - | - | 1.5 | - | - | - | - |
| | TPG | - | 1.5 | - | - | - | - | - |
| | 3M-1.3BD | 1.5 | - | - | - | 1.5 | 1.5 | 1.5 |
| | TEG | - | - | - | - | - | - | - |
| | PG | 20.0 | 20.0 | 20.0 | 20.0 | 20.0 | 20.0 | 20.0 |
| | TEGMBE | 8.0 | 8.0 | 8.0 | 8.0 | 8.0 | 8.0 | 8.0 |
| | Surfactant | 0.3 | 0.3 | 0.3 | 0.3 | 0.3 | 0.3 | 0.3 |
| | Water | Remaining amount | Remaining amount | Remaining amount | Remaining amount | Remaining amount | Remaining amount | Remaining amount |
| | Total | 100.0 | 100.0 | 100.0 | 100.0 | 100.0 | 100.0 | 100.0 |

**(Table 8)**

| | | Example | | | | Comparative Example | | |
|---|---|---|---|---|---|---|---|---|
| | | 8 | 9 | 10 | 11 | 1 | 2 | 3 |
| Composition [mass%] | Pigment | 3.0 | 3.0 | 3.0 | 3.0 | 3.0 | 3.0 | 3.0 |
| | Resin A-Na | 1.0 | 1.0 | 1.0 | 1.0 | 1.0 | 1.0 | 1.0 |
| | Urethane resin particle (r-1) | 3.0 | 8.0 | 8.0 | 8.0 | 2.0 | 10.0 | - |
| | Urethane resin particle (r-2) | - | - | - | - | - | - | - |
| | Urethane resin particle (r-3) | - | - | - | - | - | - | - |
| | Urethane resin particle (r-4) | - | - | - | - | - | - | - |
| | Urethane resin particle (r-5) | - | - | - | - | - | - | 5.0 |
| | Urethane resin particle (r-6) | - | - | - | - | - | - | - |
| | Urethane resin particle (r-7) | - | - | - | - | - | - | - |
| | Urethane resin particle (r-8) | - | - | - | - | - | - | - |
| | DPGME | - | - | - | - | - | - | - |
| | DEGMBE | - | - | - | - | - | - | - |
| | TEGMME | - | - | - | - | - | - | - |
| | TPG | - | - | - | - | - | - | - |
| | 3M-1.3BD | 1.5 | 1.5 | 1.9 | 0.5 | 1.5 | 1.5 | 1.5 |
| | TEG | - | - | - | - | - | - | - |
| | PG | 20.0 | 20.0 | 20.0 | 20.0 | 20.0 | 20.0 | 20.0 |
| | TEGMBE | 8.0 | 8.0 | 8.0 | 8.0 | 8.0 | 8.0 | 8.0 |
| | Surfactant | 0.3 | 0.3 | 0.3 | 0.3 | 0.3 | 0.3 | 0.3 |
| | Water | Remaining amount | Remaining amount | Remaining amount | Remaining amount | Remaining amount | Remaining amount | Remaining amount |
| | Total | 100.0 | 100.0 | 100.0 | 100.0 | 100.0 | 100.0 | 100.0 |

**(Table 9)**

| | | Comparative Example | | | | | |
|---|---|---|---|---|---|---|---|
| | | 4 | 5 | 6 | 7 | 8 | 9 |
| Composition [mass%] | Pigment | 3.0 | 3.0 | 3.0 | 3.0 | 3.0 | 3.0 |
| | Resin A-Na | 1.0 | 1.0 | 1.0 | 1.0 | 1.0 | 1.0 |
| | Urethane resin particle (r-1) | - | - | - | 5.0 | 5.0 | 5.0 |
| | Urethane resin particle (r-2) | - | - | - | - | - | - |
| | Urethane resin particle (r-3) | - | - | - | - | - | - |
| | Urethane resin particle (r-4) | - | - | - | - | - | - |
| | Urethane resin particle (r-5) | - | - | - | - | - | - |
| | Urethane resin particle (r-6) | 5.0 | - | - | - | - | - |
| | Urethane resin particle (r-7) | - | 5.0 | - | - | - | - |
| | Urethane resin particle (r-8) | - | - | 5.0 | - | - | - |
| | DPGME | - | - | - | 1.5 | - | - |
| | DEGMBE | - | - | - | - | - | - |
| | TEGMME | - | - | - | - | - | - |
| | TPG | - | - | - | - | - | - |
| | 3M-1,3BD | 1.5 | 1.5 | 1.5 | - | - | 2.1 |
| | TEG | - | - | - | - | 1.5 | - |
| | PG | 20.0 | 20.0 | 20.0 | 20.0 | 20.0 | 20.0 |
| | TEGMBE | 8.0 | 8.0 | 8.0 | 8.0 | 8.0 | 8.0 |
| | Surfactant | 0.3 | 0.3 | 0.3 | 0.3 | 0.3 | 0.3 |
| | Water | Remaining amount | Remaining amount | Remaining amount | Remaining amount | Remaining amount | Remaining amount |
| | Total | 100.0 | 100.0 | 100.0 | 100.0 | 100.0 | 100.0 |

### [Evaluation]

The rubfastness and adhesion to the recording medium of the formed image and ejection stability of each of the inks according to Examples 1 to 11 and Comparative Examples 1 to 9 were evaluated by the following method. Further, the ejection stability of the ink was evaluated by checking whether or not misdirection occurs in a non-printed portion. The evaluation results are shown in the following Tables 10 and 11. Note that the evaluation was performed at a temperature of 25°C and a humidity of 60% RH unless otherwise specified.

### [Preparation of evaluation film]

Films for evaluating the adhesion and rubfastness were prepared by the following method. First, the ink to be evaluated (any of the inks according to Examples 1 to 11 and Comparative Examples 1 to 9) was applied to a non-permeable recording medium to form a black solid image having a wet film thickness of approximately 6 um of the ink coating film immediately after the application. As the non-permeable recording medium, a PET film subjected to corona discharge treatment ("FE2001" manufactured by FUTAMURA CHEMICAL CO.,LTD., corona discharge treatment on one side) was used. In detail, the ink coating film was formed on the surface of the PET film on which corona discharge treatment had been performed. A bar coater ("K303S multicoater" manufactured by MATSUO SANGYO CO., LTD.) was used to apply the ink. As the bar of the bar coater, the bar of the bar No.1 was used. The printing speed was set to 30 m/min. Subsequently, the non-permeable recording medium on which the solid image was formed was dried at 100°C for 10 minutes and then allowed to stand for 12 hours to obtain an evaluation film.

### [Adhesion]

An adhesive tape ("Cellulose Tape (registered trademark) CT-18S" manufactured by NICHIBAN Co., Ltd., a width of 18 mm) was attached to the solid image of the evaluation film and then peeled off at an angle of approximately 60 degrees. The adhesive tape was peeled off at a speed where the time from the start of peeling to the end of peeling was one second. After the adhesive tape was peeled off, the evaluation film was visually observed to check whether or not the solid image was peeled off. The ratio (peeling ratio [area%]) of the area of the solid image peeled off together with the adhesive tape was calculated with the region of the solid image to which the adhesive tape was attached as 100 area%. The adhesion of the formed image to the recording medium was determined in accordance with the following criteria.

### (Criteria for evaluating adhesion)

A (Good): there is no peeling of the solid image (peeling ratio of 0 area%).
B (Slightly poor): the peeling ratio exceeds 0 area% and less than 50 area%.
C (Poor): the peeling ratio is 50 area% or more.

### [Rubfastness]

The solid image formed on the evaluation film was rubbed 100 times back and forth using a friction cloth (cotton cloth) under a load of 200 g in accordance with a rubbing tester type II (Gakushin type) method described in JIS L-0849:2013 (Test methods for colour fastness to rubbing). After rubbing with the friction cloth, the evaluation film was visually observed to check whether or not the solid image was peeled off. The ratio (peeling ratio [area%]) of the area of the solid image peeled off after rubbing was calculated with the area of the solid image in the evaluation film before rubbing as 100 area%. The rubfastness of the formed image was judged in accordance with the following criteria.

### (Criteria for evaluating rubfastness)

A (Good): there is no peeling of the solid image (peeling ratio of 0 area%).
B (Slightly poor): the peeling ratio exceeds 0 area% and less than 5 area%.
C (Poor): the peeling ratio is 5 area% or more.

### [Ejection stability (misdirection in non-printed portion)]

The ejection stability (misdirection in a non-printed portion) was evaluated in a room temperature and high humidity environment (environment of a temperature of 25°C and a humidity of 80% RH) in order to minimize the effects of drying of the ink nozzle.

As an evaluation device, an image forming apparatus (line-head mounted inkjet recording apparatus, a tester manufactured by KYOCERA Document Solutions Inc.) was used. The ink to be evaluated (any of the inks according to Examples 1 to 11 and Comparative Examples 1 to 9) was set in the line head of the evaluation device.

In the above-mentioned evaluation device, the ink was purged from the line head and the line head was wiped (purging and wiping processing). One minute after the purging and wiping processing, one horizontal line (line along the main scanning direction) was formed on A4 glossy paper ("Super Fine Paper" manufactured by Seiko Epson Corp.) using the evaluation device. At this time, the line width of the horizontal line was set to one dot (corresponding to one drop of ink). The volume per dot (volume per drop) of ink ejected from each nozzle of the line head was set to 3 pL. Next, the misalignment amount of the above-mentioned horizontal line was determined using an optical microscope ("MM-800" manufactured by Nikon Corporation). In detail, the maximum distance (misalignment amount) in the sub-scanning direction of each dot forming the above-mentioned horizontal line was measured using application software attached to the above-mentioned optical microscope. The larger the misalignment amount, the more the above-mentioned horizontal line is distorted due to the misdirection in the non-printed portion. The ejection stability (misdirection in a non-printed portion) was judged in accordance with the following criteria.

### (Criteria for evaluating ejection stability)

A (Good): the misalignment amount is 20 um or less.
B (Poor): the misalignment amount exceeds 20 um.

**(Table 10)**

| | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Adhesion | Determination | A | A | A | A | A | A | A | A | A | A | A |
| Rubfastness | Determination | A | A | A | A | A | A | A | A | A | A | A |
| Ejection stability | Misalignment amount [*µ*m] | 17 | 16 | 18 | 20 | 20 | 18 | 17 | 16 | 19 | 19 | 16 |
| | Determination | A | A | A | A | A | A | A | A | A | A | A |

**(Table 11)**

| | | Comparative Example | | | | | | | | |
|---|---|---|---|---|---|---|---|---|---|---|
| | | 1 | 2 | 3 | 4 | 5 | 6 | 7 | 8 | 9 |
| Adhesion | Determination | B | A | A | C | C | A | B | C | C |
| Rubfastness | Determination | C | A | C | C | C | A | B | B | B |
| Ejection stability | Misalignment amount [*µ*m] | 15 | 26 | 19 | 30 | 18 | 23 | 18 | 18 | 18 |
| | Determination | A | B | A | B | A | B | A | A | A |

### [Evaluation]

As shown in Tables 10 and 11, each of the inks according to Examples 1 to 11 included a pigment, a resin particle, and an aqueous medium. The resin particle included a specific urethane resin. The content ratio of the resin particle was 2.5 mass% or more and 9.0 mass% or less. The specific urethane resin had a breaking elongation at 25°C of 60% or less. The specific urethane resin had a glass transition temperature of 40°C or more and 110°C or less. The aqueous medium included water and a specific organic solvent. The content ratio of the specific organic solvent was 0.3 mass% or more and less than 2.0 mass%. The specific organic solvent had a boiling point of 200°C or more and 275°C or less. The specific organic solvent had an SP value of 19.5 (J/cm³)^{1/2} or more and 26.0 (J/cm³)^{1/2} or less. Each of the inks according to Examples 1 to 11 had excellent ejection stability and excellent rubfastness and adhesion to the recording medium of the formed image.

On the other hand, in the ink according to Comparative Example 1, the rubfastness and adhesion to the recording medium of the formed image were respectively poor and slightly poor because the content ratio of the resin particle was less than 2.5 mass%.

The ink according to Comparative Example 2 had poor ejection stability because the content ratio of the resin particle exceeded 9.0 mass%.

In the inks according to Comparative Examples 3 to 5, the rubfastness was poor because the urethane resin included in the resin particle had a breaking elongation exceeding 60%.

Further, the inks according to Comparative Examples 4 and 6 had poor ejection stability because the urethane resin included in the resin particle had a glass transition temperature less than 40°C.

In the ink according to Comparative Example 7, both rubfastness and adhesion to the recording medium of the formed image were slightly poor because the dipropylene glycol methyl ether used for comparison with the specific organic solvent had a boiling point less than 200°C and the SP value was less than 19.5 (J/cm³)^{1/2}.

In the ink according to Comparative Example 8, the rubfastness and adhesion to the recording medium of the formed image were respectively slightly poor and poor because the triethylene glycol used for comparison with the specific organic solvent had a boiling point exceeding 275°C and the SP value exceeded 26.0 (J/cm³)^{1/2}.

In the ink according to Comparative Example 9, the rubfastness and adhesion to the recording medium of the formed image were respectively slightly poor and poor because the content ratio of the specific organic solvent was 2.0 mass% or more.

It should be understood by those skilled in the art that various modifications, combinations, subcombinations and alterations may occur depending on design requirements and other factors insofar as they are within the scope of the appended claims or the equivalents thereof.

## Claims

1. An inkjet ink, comprising:
a pigment;
a resin particle; and
an aqueous medium,
the resin particle including a specific urethane resin,
a content ratio of the resin particle being 2.5 mass% or more and 9.0 mass% or less,
the specific urethane resin having a breaking elongation at 25°C of 60 % or less,
the specific urethane resin having a glass transition temperature of 40°C or more and 110°C or less,
the aqueous medium including water and a specific organic solvent,
a content ratio of the specific organic solvent being 0.3 mass% or more and less than 2.0 mass%,
the specific organic solvent having a boiling point of 200°C or more and 275°C or less,
the specific organic solvent having an SP value of 19.5 (J/cm³)^{1/2} or more and 26.0 (J/cm³)^{1/2} or less.

2. The inkjet ink according to claim 1, wherein
the resin particle has a volume median diameter of 8 nm or more and 100 nm or less.

3. The inkjet ink according to claim 1 or 2, wherein
the specific organic solvent includes at least one of a diethylene glycol monobutyl ether, a triethylene glycol monomethyl ether, a tripropylene glycol, and 3-methyl-1,3-butanediol.

4. The inkjet ink according to claim 1 or 2, further comprising
a surfactant,
the surfactant including a silicone surfactant.

5. The inkjet ink according to claim 1 or 2, which is used for forming an image on a non-permeable recording medium.

6. The inkjet ink according to claim 1 or 2, which is used for surface printing.
